Europäisches Patentamt

European Patent Office

Office européen des brevets

(19)

(11) Publication number: **0 138 443**
**B1**

(12) **EUROPEAN PATENT SPECIFICATION**

(45) Date of publication of patent specification: **20.12.89**

(21) Application number: **84306521.0**

(22) Date of filing: **25.09.84**

(51) Int. Cl.⁴: **F 16 J 15/56,** F 16 J 15/40,
F 16 J 15/26

(54) Piston rod seal.

(30) Priority: **26.09.83 GB 8325668**

(43) Date of publication of application:
**24.04.85 Bulletin 85/17**

(45) Publication of the grant of the patent:
**20.12.89 Bulletin 89/51**

(84) Designated Contracting States:
**BE DE FR GB IT**

(56) References cited:
**GB-A- 834 998
GB-A-1 380 462
GB-A-2 017 832**

(73) Proprietor: **AEPLC**
**Cawston House Cawston Rugby
Warwickshire, CV22 7SA (GB)**

(72) Inventor: **Hill, Alfred**
**Westoe Brewery Lane
Holcombe Bath.BA3 5EG (GB)**
Inventor: **Day, Peter**
**17 Clara Drive Calverley
Pudsey West Yorkshire LS28 5QP (GB)**
Inventor: **Macleod, Hugh**
**32 Bildsdale Way
Baildon West Yorkshire (GB)**

(74) Representative: **Rees, David Christopher et al
Kilburn & Strode 30 John Street
London WC1N 2DD (GB)**

Courier Press, Leamington Spa, England.

## Description

The present invention relates to a seal for a piston rod extending between a cylinder and a crankcase of, for example, a low speed diesel engine, the seal comprising a pair of sealing rings closely surrounding the rod.

In many reciprocating engines and compressors the piston rod passes through a partition, or diaphragm as it is often termed, which separates the enclosed crankcase from either the surrounding atmosphere or a chamber which contains, or is contaminated by the liquid or gas being handled in the cylinder. The piston rod thus operates alternately between these two environments, and where it passes through the diaphragm it is usual to fit some form of packing or seal to prevent contamination of one environment by the other and to prevent loss of contents of one to the other.

In the particular case of the low speed diesel engine, commonly used for marine propulsion, current examples of which generally have cylinders arranged with vertical axes, the chamber above the diaphragm usually contains scavenge air under pressure which is contaminated by unburnt fuel oil, unused cylinder-lubricating oil and combustion products, whilst below is the enclosed crankcase with its atmosphere of air, lubricating oil spray and mist at atmospheric pressure.

It is important that the crankcase lubricating oil is not contaminated by the products above the diaphragm which are at a higher pressure than the crankcase. Also it is important to prevent lubricating oil passing out of the crankcase resulting in loss of lubricating oil and the expense of replenishing it.

GB—A—1,380,462 discloses stuffing box packing for a piston rod in which a chamber, adjacent the piston rod is created between sealing rings. The chamber is connected with atmosphere through a pipe. The pressure in the space on the piston side of one of the rings is super-atmospheric. This pressure is first dropped across the relevant sealing ring and then vented through the chamber. This is meant to ensure that no impurities in the space penetrate past oil scraper rings and into the crankcase-side of the other of the sealing rings.

GB—A—834,998 discloses a seal for a piston rod in which a chamber is created between a sealing ring and a stripping ring adjacent the surface of the piston rod. The pressure in the chamber is kept lower than that in the space on the other side of the sealing ring. Thus, a current of high velocity air flows past the sealing ring in the chamber stripping oil off the piston rod and delivering it into the chamber. The oil is then drawn off as a suspension in air by a suction pump.

GB—A—2,017,832 discloses raw material distribution apparatus for a furnace in which a slidable armour rod is used to distribute raw material in the furnace. The rod extends from the furnace and is sealed by seals. In between the seals is a space to which pressurised sealing gas is fed. The gas acts on the annular seals to urge them against the rod and, in the case of the seal nearest the furnace, passes under its surface adjacent the rod to exclude dust by positive pressure.

Existing types of seal consist of a series of rings, each in sections, held in contact with the piston rod by surrounding garter springs, the rings being a close fit in grooves in the stuffing box. The function of the rings is to wipe the piston rod clean as it enters the packing and to return any fluid on the surface of the rod to its compartment of origin.

Usually the packings are not completely effective and therefore, within the length of the seal, a drain is provided from which a mixture of crankcase lubricating oil and scavenge chamber contaminents is drawn off for purification and reclamation of the crankcase oil.

The object of this invention is to provide an improved form of seal which will greatly reduce the quantity of crankcase lubricating oil being contaminated and thereby reduce the effort and expense of reclamation.

According to the invention there is provided a seal for a piston rod extending between a cylinder and a crankcase of an engine, the seal comprising a pair of seal rings closely surrounding the rod, and a space surrounding the rod at a position between the rings, which seal is characterised in that the space communicates with a supply of exhaust gas from the engine, the exhaust gas supplied to the space being at a higher pressure than the pressure on the opposite side of the two rings to the space, while the engine is in use.

Thus, a seal according to the invention for an engine utilises the super-atmospheric pressure of the exhaust gases to enhance the seal provided by the rings.

Preferably, the seal includes a stuffing box or collar surrounding the rod, the space being formed in the collar as an annular channel, and each ring being mounted on the collar by means of a radially inwardly facing flange on the collar extending into a corresponding outwardly facing groove in each ring. The seal may include a further series of sealing rings located in annular recesses in the collar. Preferably, each ring is in two or more sections and is held in contact with the rod by means of a garter spring. There may be a drain passage from at least one of the annular recesses in the collar.

The barrier gas may be drawn from the engine exhaust or from a turbo-charger driven by the engine exhaust, or indeed, any convenient source of high pressure non-contaminated non corrosive gas may be used.

The material from which the various sealing rings are constructed will vary according to the application and their position and function since the ring material must be compatible with the environment at each side of the stuffing box. For example, a metallic alloy may be used such as cast iron, leaded bronze or whitemetal (Babbit) or plastics either with or without fillers or reinforcement. One such of the preferred materials is polyetheretherketone reinforced with carbon fibre.

One or more of the rings may have joint gaps between the sections, adjacent sections may be connected by means of a tongue on one section extending into a corresponding groove in the adjacent section. The tongue and groove are preferably diagonally orientated such that there may be no direct passage for gas past the sealing ring, but gas from the higher pressure side may pass behind the ring to assist the garter spring in maintaining the sealing ring in contact with the rod.

One or more of the rings may have joints between adjacent sections in two planes so forming lap joints adjacent the rod so that there is no direct passage for gas in an axial direction, the joints being closed in a radial direction by segments each forming a tangential joint normal to the two plates, the segments being held in contact with the sections by the garter spring.

Preferably, the sections of the axially outermost of those rings which are located in recesses in the collar have non-radial butting joints of lap form and have two radially inwardly extending edges contacting the rod, the groove between the edges being connected to the outer periphery of the ring by a series of passages. This may provide an easy flowpath for any fluid removed. In such a case the garter springs of the outermost of those rings which are located in recesses in the collar are of open coil form where the gap between adjacent coils is at least equal to the wire diameter. Preferably, the axially outermost rings at their axially outermost edges meet the rod at an acute angle.

The invention may be carried into practice in various ways and some embodiments will now be described by way of an example, making reference t

Figure 16 is a section on the line c—c in Figure 14, and

Figure 17 is a section through a turbo-charger cyclone showing a divergent nozzle for supplying barrier gas.

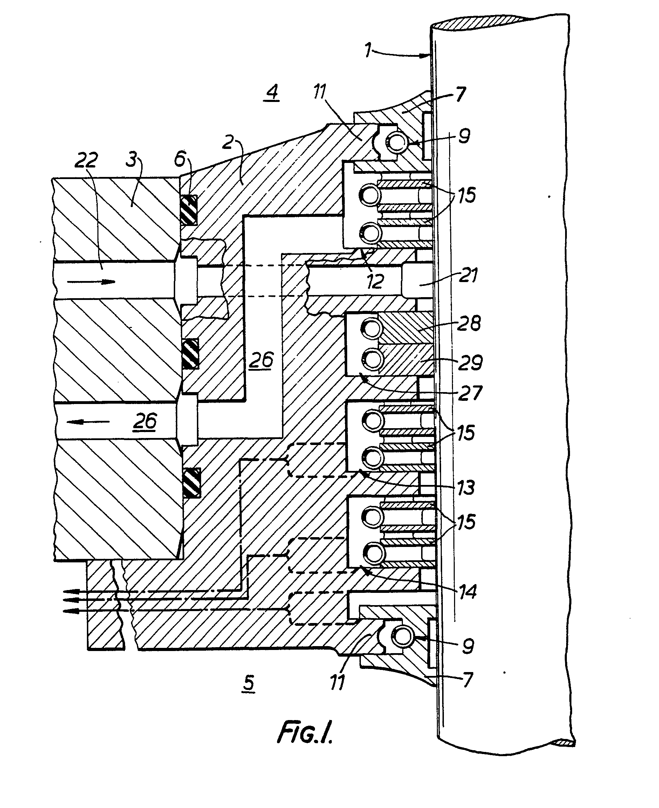

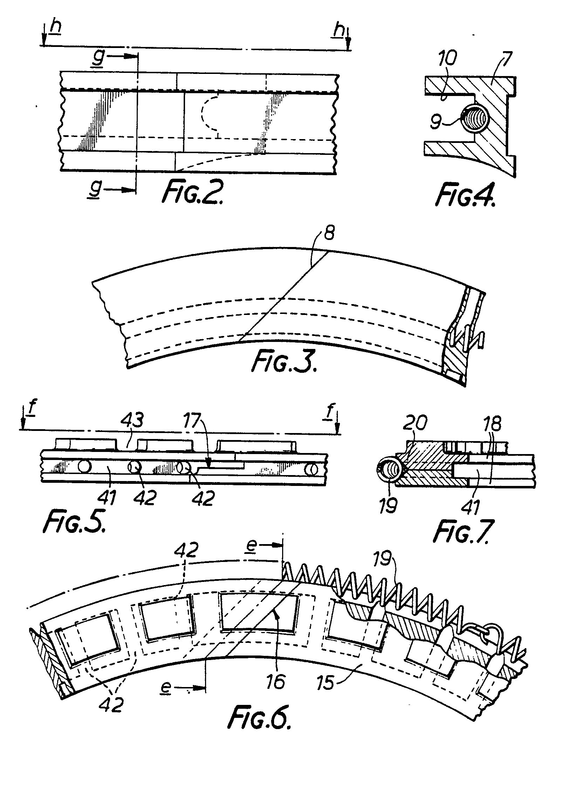

A typical seal or packing suitable for large, slow-speed diesel engines is shown in half section in Figure 1 where a piston rod 1 reciprocates through a stuffing box or collar 2 which is secured in a diaphragm 3 by a bolted flange or similar suitable means.

Above the stuffing box 2 is a scavenge chamber 4 containing air at above atmospheric pressure and certain contaminants such as combustion products, unburnt fuel oil and cylinder oil, and below the stuffing box 2 is the crankcase 5 at atmospheric pressure containing a mixture of air, oil mist and oil spray.

Leakage between the stuffing box and the diaphragm and any connecting passages is prevented by O-rings 6.

In the bore of the stuffing box a number of sealing rings of various forms are arranged, each being a close sliding fit in the groove so that it can follow any small transverse movement of the piston rod.

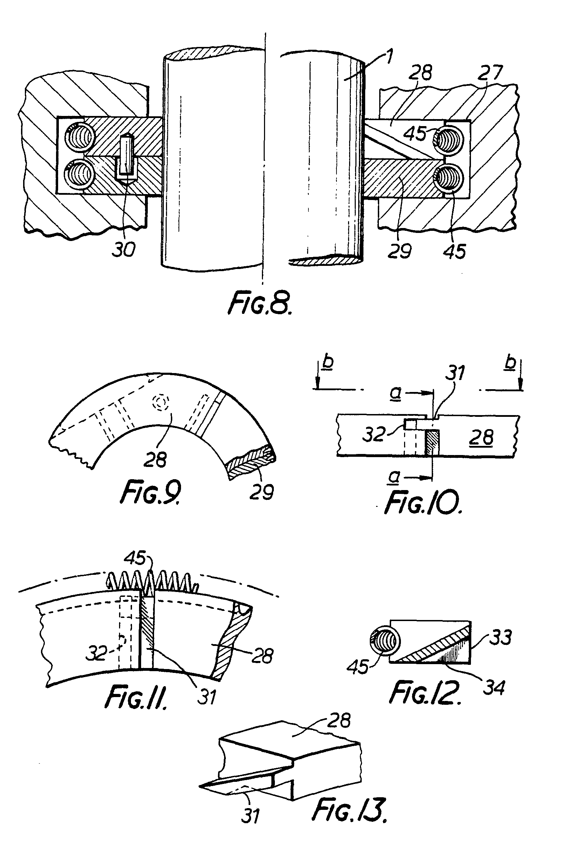

At the endmost positions at the top and bottom of the stuffing box are fitted scraper or shedder rings 7, the function of which is to scrape from the piston rod thick films of fluid using the approach velocity of the rod 1 so that it does not impinge again on any moving parts. These rings 7 are shown in detail in Figures 2 to 4. They comprise a number of sections having close fitting angled joints 8 which enable wear to be accommodated by sliding, and they are held in contact with the piston rod by a surrounding garter spring 9 located in a recess at the bottom of a radially outwardly facing parallel sides groove 10. This enables the ring 7 to slide sideways on an internal flange 11 formed in the stuffing box bore.

This form of ring has various advantages. Firstly, there is no recess at the bore in which oil may be trapped by the approach velocity of the piston rod 1 causing a build up of pressure at the bore of the ring which would tend to force oil past the ring. Secondly, no debris such as burnt oil or tar can choke the recess at the top ring preventing easy sliding action in the groove.

Finally, the enclosure of the spring 9 prevents similar debris from collecting between the coils of the spring which would otherwise reduce the spring tension.

In the grooves 12, 13 and 14 are fitted pairs of scraper rings 15 to remove films of liquid clinging to the surface of the piston rod and which have passed the endmost shedder rings 7. These rings 15 are shown in more detail in Figures 5 to 7. They comprise a number of sections which have close fitting angled joints 16 with a lap 17 so that the joints of the narrow scraping edges 18 are not in a direct axial line. The angled joints enable wear to be taken up by mutual sliding of the sections. Between the scraping edges 18 is a deep groove 41 communicating with the back of the ring by a number of holes or passages 42 spaced around the circumference. The sections of the ring are held in contact with the piston rod 1 by a surrounding garter spring 19 supported on the flanks 20 of a V-section groove. The spring 19 is formed with open coils to allow a free passage for drainage, the gap between the coils being not less than the wire diameter and preferably at least twice the diameter of the wire when in the free state. When in position the gap will of course increase slightly.

In the preferred form shown in Figures 5 to 7, additional drainage channels 43 are arranged on the upper side of the ring 15 to provide each edge 18 with its own drainage.

Fluid passing the upper scraper or shedder ring 7 and removed by the scraper rings 15 in the groove 12 is drained off by the passages 26 to the outside of the engine frame, this being aided by the pressure differential which exists.

Immediately below the groove 12 is an annular space 21 into which gas is supplied via a passage 22 at a pressure above that in the scavenge chamber 4 to form a plenum and a barrier to the passage of fluid from the scavenging chambers 4 to the space 21 and also from the crankcase 5 to the space 21. This barrier gas may be an inert gas 6 from a suitable supply but it may, more conveniently, be air drawn from a turbo-blower discharge at a point before the aftercooler, so that the pressure drop through the cooler provides a convenient means of ensuring that the gas is at a pressure above that in the scavenge chamber 4.

In engines where the pressure drop in the cooler is insufficient, the pressure to the space 21 may be increased by using a diverging nozzle as illustrated in Figure 17. This shows diagrammatically the blower discharge volute 23 with its delivery duct to the scavenge chamber 4. In the volute 23 at the point of maximum velocity, a nozzle 24 of divergent cross-sectional area is fitted to convert the kinetic energy of the air to pressure, discharging via an outlet 25 to an inlet 22 in the seal.

As an alternative, the barrier gas may be obtained from the engine exhaust before it enters the turboblower, passing the barrier gas through a suitable cleaner, filter and cooler. This method has two advantages, firstly the gas will be inert and, secondly, it will be available at a higher pressure, should this be desired, than the blower discharge.

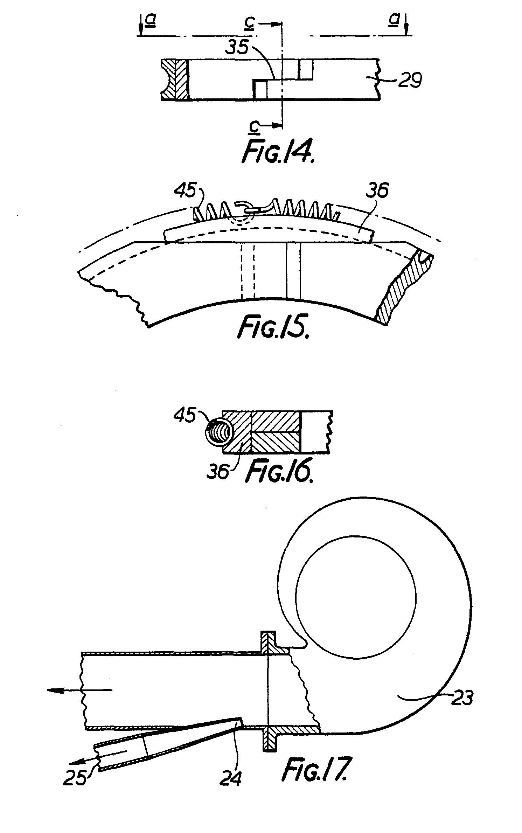

To minimise the passage of barrier gas from the space 21 to the crankcase 5 a pair of gas sealing rings 28, 29 are fitted in a groove 27 in the stuffing box. These rings are illustrated in Figures 8 to 15.

Each ring 28, 29 is in 2 or more sections having joints with gaps to permit the ring sections to maintain contact with the piston rod 1 when wear takes place, the sections being held to the rod by surrounding garter springs 45. The two rings 28, 29 are connected together by a dowel 30, so that their joints are staggered as shown in Figure 9.

The upper, or pressure side ring 28 (Figures 10 to 13) has joints fitted with tongues 31 which closely fit into grooves 32 being flush with the ring bore 33 and its lower face 34, so preventing the passage of gas through the joint gap at these points. Gas can, however, pass through the joint gaps between the tongue 31 and the wall of the groove 27 to pressurise the space behind the rings, thus augmenting the spring force in maintaining contact with the piston rod 1.

The lower ring 29, shown in Figures 14 to 16 is similar to existing so called tangentially split rings except that the joint gaps between the ring sections have a close fitting lap 35 which effectively prevents the passage of gas in an axial direction, thus making this ring 29 a complete gas seal in itself. The joint gaps are sealed against the leakage of gas from the back of the ring in a radial direction by separate segments 36.

Although, in the example illustrated, the pair comprises two different types of ring, it should be understood that only one ring of either type could be fitted or indeed two rings of design 29 could be used in which case gas pressure to the back of the rings would be arranged by passages, such as holes or grooves, leading from the pressure side to the back of the groove 27.

It is to be understood that the arrangement shown in Figure 1 is by way of example and according to the requirements of the application, there may be a greater or smaller number of scraper rings and/or gas sealing rings at either side of the barrier gas annulus 21.

## Claims

1. A seal for a piston rod (1) extending between a cylinder (4) and a crankcase (5) of an engine, the seal comprising a pair of seal rings (7) closely surrounding the rod (1), and a space (21) surrounding the rod (1) at a position between the rings (7), characterised in that the space (21) communicates with a supply (22) of exhaust gas from the engine, the exhaust gas supplied to the space being at a higher pressure than the pressure on the opposite side of the two rings (7) to the space (21), while the engine is in use.

2. A seal as claimed in Claim 1, characterised by additionally including a collar (2) surrounding the rod (1), the space being formed in the collar as an annular channel (21), each ring (7) being mounted on the collar by means of a radially inwardly facing flange (11) on the collar extending into a corresponding outwardly facing groove (10) in each ring (7).

3. A seal as claimed in Claim 2, characterised by a further series of sealing rings (15, 28, 29) located in annular recesses (12, 13, 14, 27) in the collar, at least one of which recesses having a drain passage (26).

4. A seal as claimed in Claim 1 or Claim 2 or Claim 3, characterised in that each ring (7, 15, 28, 29) is in two or more sections and is held in contact with the rod by means of a garter spring (9, 19, 45).

5. A seal as claimed in any preceding claim characterised in that the exhaust gas is taken directly from the engine exhaust.

6. A seal as claimed in any of Claims 1 to 4, characterised in that the exhaust gas is taken from a turbocharger driven by the engine exhaust.

7. A seal as claimed in any of Claims 4 to 6, characterised in that one or more of the rings (28) have joint gaps between the sections, adjacent sections being connnected by means of a diagonal tongue (31) on one section extending into a corresponding groove (32) in the adjacent section.

8. A seal as claimed in any of Claims 4 to 7, characterised in that one or more of the rings (29) has joints between adjacent sections in two planes so forming lap joints adjacent the rod (1) so that there is no direct passage for gas in an axial direction, the joints being closed in a radial direction by segments (36) each forming a tangential joint normal to the two planes, each segment being held in contact with the sections by the garter spring (45).

9. A seal as claimed in any of Claims 4 to 8, characterised in that the sections of the axially outermost of those rings (15) which are located in recesses (12) in the collar have non-radial butting joints (16) of lap form and have two radially inwardly extending edges contacting the rod (1), the groove between the edges being connected to the outer periphery of each such ring (15) by a series of passages (42).

10. A seal as claimed in any preceding claim, characterised in that the axially outermost edges of the rings (15), which are at each end of the seal, meet the rod (1) at an acute angle.

## Patentansprüche

1. Dichtung für eine Kolbenstange (1), die sich zwischen einem Zylinder (4) und einem Kurbelkasten (5) eines Motors erstreckt, mit einem Paar Dichtringen (7), welche die Kolbenstange (1) dicht umfassen, und mit einem Raum (21), der die Kolbenstange (1) in einer Zwischenlage zwischen den Kolbenringen (7) umgibt, dadurch gekennzeichnet, daß der Raum (21) in Verbindung mit einer Zuführung (22) von Abgas aus dem Motor steht, wobei der Druck des dem Raum zugeführten Abgases bei Betrieb des Motors größer ist als der Druck auf den dem Raum (21) abgewandten Seiten der zwei Kolbenringe (7).

2. Dichtung nach Anspruch 1, zusätzlich gekennzeichnet durch eine Hülse (2), welche die Kolbenstange (1) umgibt, wobei der Raum in der Hülse als ein Ringkanal (21) ausgebildet und jeder Dichtring (7) an der Hülse über einen radial nach innen gerichteten Hülsenflansch (11) befestigt ist, der in eine entsprechend nach außen öffnende Nut (10) in jedem Ring (7) hineinragt.

3. Dichtring nach Anspruch 2, gekennzeichnet durch eine weitere Reihe von in Ringnuten (12, 13, 14, 27) in der Hülse sitzenden Dichtringen (15, 28, 29), wobei zumindest eine dieser Ringnuten einen Ablaufkanal (26) aufweist.

4. Dichtung nach einem der Ansprüche 1 bis 3, dadurch gekennzeichnet, daß jeder Dichtring (7, 15, 28, 29) in zwei oder mehr Abschnitte unterteilt ist und mittels einer Ringfeder (9, 19, 45) in Anlagekontakt mit der Kolbenstange gehalten wird.

5. Dichtung nach einem der vorangehenden Ansprüche, dadurch gekennzeichnet, daß das Abgas direkt aus dem Motorauslaß abgenommen wird.

6. Dichtung nach einem der Ansprüche 1 bis 4, dadurch gekennzeichnet, daß das Abgas von einem vom Motorabgas angetriebenen Turbolader abgenommen wird.

7. Dichtung nach einem der Ansprüche 4 bis 6, dadurch gekennzeichnet, daß einer oder mehrere der Dichtringe (28) zwischen den Abschnitten Spalte aufweisen, wobei nebeneinanderliegende Abschnitte miteinander über eine diagonale Zunge (31) verbunden sind, die an einem Abschnitt angebracht ist und in eine entsprechende Nut (32) im danebenliegenden Abschnitt hineinragt.

8. Dichtung nach einem der Ansprüche 4 bis 7, dadurch gekennzeichnet, daß einer oder mehrere der Dichtringe (29) zwischen nebeneinanderliegenden Abschnitten Verbindungen in zwei Ebenen aufweisen, wodurch der Kolbenstange benachbart Überlappverbindungen derart ausgebildet werden, daß kein direkter Gasdurchlaß in axialer Richtung gegeben ist, und die Verbindungen in radialer Richtung mittels Segmenten (36) geschlossen sind, deren jedes eine tangentiale Verbindung senkrecht zu den beiden Ebenen ausbildet und durch die Ringfeder (45) in Anlagekontakt mit den Abschnitten gehalten wird.

9. Dichtung nach einem der Ansprüche 4 bis 8, dadurch gekennzeichnet, daß die Abschitte der axial äußersten Dichtringe (15), die in Ausnehmungen (12) in der Hülse sitzen, nicht-radiale, sich überlappende Stoßflächen (16) sowie zwei radial nach innen ragende, gegen die Kolbenstange (1) anliegende Umlaufkanten aufweisen, wobei die Vertiefung zwischen diesen Umlaufkanten mit dem Außenumfang jedes solchen Ringes (15) über eine Reihe von Durchlässen (42) verbunden ist.

10. Dichtung nach einem der vorangehenden Ansprüche, dadurch gekennzeichnet, daß die axial äußersten, sich an jedem Ende der Dichtung befindlichen Umlaufkanten der Ringe (15) gegen die Kolbenstange (1) in einem spitzen Winkel anlaufen.

## Revendications

1. Joint d'étanchéité pour une tige de piston (1), qui s'étend entre un cylindre (4) et le carter (5) d'un moteur, le joint d'étanchéité comportant un couple de bagues d'étanchéité (7) entourant étroitement la tige (1), et une cavité (21) entourant la tige (1) dans une position située entre les bagues (7), caractérisé en ce que la cavité (21) communique avec une arrivée (22) des gaz d'échappe- ment provenant du moteur, les gaz d'échappement envoyés à la cavité étant à une pression supérieure à la pression présente sur le côté des deux bagues (7), situé à l'opposé de la cavité (21), pendant le fonctionnement du moteur.

2. Joint d'étanchéité selon la revendication 1, caractérisé en ce qu'il inclut en outre un collier (2) entourant la tige (1), la cavité étant formée dans le collier sous la forme d'un conduit annulaire (21), et chaque bague (7) étant montée sur le collier au moyen d'une bride (11), tournée radialement vers l'intérieur, située sur le collier et s'engageant dans une gorge correspondante (10) s'ouvrant vers l'extérieur, ménagée dans chaque bague (7).

3. Joint d'étanchéité selon la revendication 2, caractérisé par une série supplémentaires de bagues d'étanchéité (15, 28, 29) situées dans des renfoncements annulaires (12, 13, 14, 27) ménagés dans le collier et dont l'un au moins possède un passage d'évacuation (26).

4. Joint d'étanchéité selon la revendication 1 ou 2 ou 3, caractérisé en ce que chaque bague (7, 15, 28, 29) est formée de deux ou d'un plus grand nombre de sections et est maintenue en contact avec la tige au moyen d'un ressort cylindrique en anneau (9, 19, 45).

5. Joint d'étanchéité selon l'une quelconque des revendications précédentes, caractérisé en ce que les gaz d'échappement sont prélevés directement au niveau de l'échappement du moteur.

6. Joint d'étanchéité selon l'une quelconque des revendications 1 à 4, caractérisé en ce que les gaz d'échappement sont prélevés à partir d'un turbocompresseur à suralimentation entraîné par des gaz d'échappement du moteur.

7. Joint d'étanchéité selon l'une quelconque des revendications 4 à 6, caractérisé en ce qu'il est prévu des espaces de joint entre les sections d'une ou de plusieurs des bagues (28), des sections adjacentes étant raccordées au moyen d'une languette diagonale (31) prévue sur une section et s'engageant dans une gorge correspondante (32) située dans la section adjacente.

8. Joint d'étanchéité selon l'une des revendications 4 à 7, caractérisé en ce qu'une ou plusieurs des bagues (29) comportent des joints disposés entre des sections adjacentes, dans deux plans de manière à former des joints à recouvrement adjacents à la tige (1) de sorte qu'il n'existe aucun passage direct pour le gaz dans une direction axiale, les joints étant fermés dans une direction radiale par des segments (36) formant chacun un joint tangentiel perpendiculaire aux deux plans, et chaque segment étant maintenu en contact avec les sections au moyen du ressort cylindrique en anneau (45).

9. Joint d'étanchéité selon l'une quelconque des revendications 4 à 8, caractérisé en ce que les sections de la plus extérieure, du point de vue axial, des bagues (15), qui sont situées dans des renfoncements (12) ménagés dans le collier, comportent des joints bout-à-bout non radiaux (16) en forme de joints à recouvrement et possèdent deux bords, intérieurs du point de vue radial, placés en contact avec la tige (1), la gorge située entre les bords étant raccordée au pourtour extérieur de chaque bague (15) de ce type par une série de passages (42).

10. Joint d'étanchéité selon l'une quelconque des revendications précédentes, caractérisé en ce que les bords, les plus extérieurs du point de vue axial, des bagues (15), qui sont situées à chaque extrémité du joint d'étanchéité, s'appliquent sous un angle aigu contre la tige (1).

Fig.I.

Fig.2.

Fig.4.

Fig.3.

Fig.5.

Fig.7.

Fig.6.

2

*Fig.8.*

*Fig.9.*

*Fig.10.*

*Fig.11.*

*Fig.12.*

*Fig.13.*

Fig.14.

Fig.15.

Fig.16.

Fig.17.

4